# EUROPÄISCHE PATENTSCHRIFT

(11) **EP 3 011 714 B1**
(45) Veröffentlichungstag und Bekanntmachung des Hinweises auf die Patenterteilung: **07.08.2019**
(21) Anmeldenummer: 14731549.3
(22) Anmeldetag: 11.06.2014
(51) Int. Cl.: H04L 29/06, H04W 12/06, H04W 4/029, H04W 8/18, H04L 29/08

(54) **BETREIBEN EINES SICHERHEITSELEMENTS MIT DEM AUF DAS AUSGEWÄHLTE VERWENDUNGSPROFIL ABGESTIMMTEN SATZ VON BETRIEBSPARAMETERN**
OPERATION OF A SECURITY ELEMENT WITH THE SET OF OPERATING PARAMETERS MATCHED TO THE SELECTED USE PROFILE
FONCTIONNEMENT D'UN ÉLÉMENT DE SÉCURITÉ À L'AIDE DE L'ENSEMBLE DE PARAMÈTRES DE FONCTIONNEMENT ADAPTÉ AU PROFIL D'UTILISATION SÉLECTIONNÉ

(30) Priorität: 18.06.2013 DE 102013010261
(43) Veröffentlichungstag der Anmeldung: 27.04.2016
(73) Patentinhaber: Giesecke+Devrient Mobile Security GmbH, 81677 München (DE)
(72) Erfinder: WIMBÖCK, Ulrich, 82327 Tutzing (DE)
(86) Internationale Anmeldenummer: PCT/EP2014/001589
(87) Internationale Veröffentlichungsnummer: WO 2014/202192

(56) Entgegenhaltungen:
- US-A1- 2004 204 092
- US-A1- 2010 325 269

## Beschreibung

### Gebiet der Erfindung

Die Erfindung betrifft ein Verfahren zum Betreiben eines Sicherheitselements sowie ein solches Sicherheitselement. Insbesondere betrifft die Erfindung ein Verfahren zum Verwalten von Einstellungen von Betriebsparametern eines Sicherheitselements sowie ein solches Sicherheitselement.

### Hintergrund der Erfindung

Sicherheitselemente ("Secure Elements") werden in vielen Bereichen eingesetzt, beispielsweise als Teilnehmeridentifikationsmodule in Form von SIM-Karten zum Nachweis einer Zugangsberechtigung zu einem Mobilfunknetz oder in Form von Chipkarten zur Durchführung von Transaktionen des elektronischen Zahlungsverkehrs. Der Einsatz erfolgt dabei häufig im Zusammenspiel mit einem für die jeweilige Anwendung vorgesehenen Lese- bzw. Endgerät, beispielsweise einem Mobiltelefon oder einem Bezahlterminal. Außer bei sehr einfach gelagerten Anwendungen ist es in der Regel erforderlich, dass das Sicherheitselement über einen Prozessor verfügt, auf dem wenigstens eine Applikation zur Ausführung der Anwendung läuft. Viele Sicherheitselemente sind hierzu neben einer Applikation mit einem Betriebssystem ausgestattet, wobei der Programmcode der Applikation sowie der Programmcode, der das Betriebssystem darstellt, in einem nicht-flüchtigen Speicher des Sicherheitselements gespeichert sind und im Betrieb von dessen Prozessor ausgeführt werden.

Es ist nicht unüblich, dass bei der Herstellung einer Charge von Sicherheitselementen in der Regel deren Einsatzgebiet im Feld nicht genau bekannt ist. Daher kann der Fall eintreten, dass die vom Hersteller bzw. Herausgeber vorgenommenen Einstellungen von Betriebsparametern eines Sicherheitselements nicht optimal für dessen tatsächlichen Einsatz sind, da der Hersteller bzw. Herausgeber in der Regel insofern einen Kompromiss eingehen muss, als die Betriebsparameter so gewählt werden müssen, dass diese einen Betrieb des Sicherheitselements in im Wesentlichen allen potentiell möglichen Einsatzgebieten erlauben.

Beispielsweise kann bei einer Charge von Sicherheitselementen, die als Teilnehmeridentifikationsmodule in Form von SIM-Karten ausgestaltet sind, der Fall eintreten, dass ein Teil dieser Charge von Teilnehmeridentifikationsmodulen in Endgeräten mit einem im Wesentlichen festen Standort zum Einsatz kommen, wie Verkaufsautomaten, Set-Top-Boxes, Sensor-Vorrichtungen oder Smart-Meter-Vorrichtungen, bei denen das Teilnehmeridentifikationsmodul in der Regel nur kurzzeitig aktiviert wird, d.h. sich nur kurzzeitig in ein Mobilfunknetzwerk einbucht, um einen Statusbericht an ein mit dem Mobilfunknetzwerk verbundenen Hintergrundsystem zu senden. Ein anderer Teil dieser Charge von Teilnehmeridentifikationsmodulen könnte jedoch in Endgeräten eingesetzt werden, die häufig ihren Standort ändern und praktisch einen ununterbrochen Zugang zu einem Mobilfunknetzwerk benötigen.

US2010325269 offenbart eine Anwendung auf einer SIM-Karte, die sich der Funktionalität je nach Historie anpasst. Personalisierte Dienste, spezielle Anwendungen befinden sich auf der SIM Karte. Das Profil wird durch den Smart Card Web Server (SCWS) und das Benutzerterminal bestimmt.

Vor diesem Hintergrund stellt sich der vorliegenden Erfindung die Aufgabe, ein verbessertes Verfahren zum Betreiben eines Sicherheitselements sowie ein entsprechend ausgestaltetes Sicherheitselement bereitzustellen, mit denen die vorstehend beschriebenen Nachteile zumindest teilweise behoben werden können.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Die Erfindung basiert auf dem Grundgedanken, das Sicherheitselement so auszugestalten, dass das Sicherheitselement beim Einsatz im Feld Daten bzw. Informationen über die tatsächliche Verwendung des Sicherheitselements und/oder des Endgeräts sammelt, z.B. über die Häufigkeit, mit der bestimmten Funktionen des Sicherheitselements aufgerufen werden. Anhand dieser vom Sicherheitselement gesammelten Informationen werden durch die Auswahl eines passenden Verwendungsprofils ein oder mehrere Betriebsparameter des Sicherheitselements derart angepasst, dass das Sicherheitselement optimal für die tatsächliche Verwendung des Endgeräts eingestellt ist.

Auf der Grundlage des vorstehend beschriebenen Grundgedankens wird gemäß einem ersten Aspekt der Erfindung ein Verfahren zum Betreiben eines Sicherheitselements bereitgestellt, das Teil eines mobilen Endgeräts ist, wobei die Funktionalität des Sicherheitselements von einem auf dem Sicherheitselement hinterlegten Satz von Betriebsparametern abhängt. Dabei umfasst das Verfahren die folgenden Schritte: das Betreiben des Sicherheitselements mit den auf dem Sicherheitselement hinterlegten Satz von Betriebsparametern; das Sammeln von Daten über die Verwendung des Sicherheitselements und/oder des Endgeräts; das Auswählen eines Verwendungsprofils auf der Grundlage der gesammelten Daten, wobei dem Verwendungsprofil ein darauf abgestimmter Satz von Betriebsparametern zugeordnet ist; und das Betreiben des Sicherheitselements mit dem auf das ausgewählte Verwendungsprofil abgestimmten Satz von Betriebsparametern.

Unter dem Begriff "Betriebsparameter" werden hier Parameter verstanden, die den Betrieb des Sicherheitselements beeinflussen, d.h. beeinflussen, wie von diesen Betriebsparametern abhängige Funktionen bzw. Dienste des Sicherheitselements vom Sicherheitselement ausgeführt werden. Unter einem Satz von Betriebsparametern wird erfindungsgemäß auch ein einziger Betriebsparameter verstanden.

Vorzugsweise wird der Schritt des Sammelns von Daten über die Verwendung des Sicherheitselements und/oder des mobilen Endgeräts mittels einer Applikation auf dem Sicherheitselement durchgeführt.

Gemäß bevorzugter Ausführungsformen der Erfindung erfolgt der Schritt des Auswählens eines Verwendungsprofils durch das Sicherheitselement. Gemäß alternativer bevorzugter Ausführungsformen erfolgt der Schritt des Auswählens eines Verwendungsprofils durch eine Serverinstanz, die in Kommunikation mit dem Sicherheitselement steht und die Zugriff auf eine Datenbank mit einer Vielzahl von Verwendungsprofilen hat.

Bei dieser bevorzugten Ausführungsform handelt es sich bei dem Sicherheitselement vorzugsweise um ein Teilnehmeridentifikationsmodul, das dazu ausgestaltet ist, einen Teilnehmer gegenüber einem Mobilfunknetzwerk zu authentisieren und mit der Serverinstanz über das Mobilfunknetzwerk zu kommunizieren.

Gemäß der Erfindung wird das Verfahren dazu verwendet, einen Betriebsparameter des Sicherheitselements anzupassen, der bestimmt, ab welcher Größe in einem flüchtigen Speicher des Sicherheitselements hinterlegte Zugriffszähler, die jeweils die Zahl der Zugriffe auf eine jeweilige Speicherseite des nichtflüchtigen Speichers des Sicherheitselements angeben, im nichtflüchtigen Speicher des Sicherheitselements gespeichert werden.

Gemäß der Erfindung wird das Verfahren dazu verwendet, einen Betriebsparameter des Sicherheitselements anzupassen, der die Länge des Zeitfensters bestimmt, innerhalb dessen sich das Sicherheitselement in das Mobilfunknetzwerk einbuchen kann.

Vorzugsweise können die Schritte des Verfahrens gemäß dem ersten Aspekt der Erfindung mehrfach hintereinander durchgeführt werden, um iterativ optimale Betriebsparameter zu bestimmen und/oder Änderungen der Verwendung des Sicherheitselements und/oder des mobilen Endgeräts berücksichtigen zu können.

Gemäß einem zweiten Aspekt der Erfindung wird ein Sicherheitselement bereitgestellt, das Teil eines mobilen Endgeräts ist. Dabei hängt die Funktionalität des Sicherheitselements von einem auf dem Sicherheitselement hinterlegten Satz von Betriebsparametern ab und das Sicherheitselement ist dazu ausgestaltet, gemäß einem Verfahren gemäß dem ersten Aspekt der Erfindung betrieben zu werden.

Bei einem Sicherheitselement handelt es sich beispielsweise um einen in Hardware ausgestalteten Datenträger. Das Sicherheitselement ist beispielsweise als ein fest integrierter Bestandteil in einem Endgerät angeordnet, wobei es entweder in der Form nicht vom Endgerät entnommen werden kann, beispielsweise als Teilnehmeridentifikationsmodul, M2M-Modul, Co-Prozessor, Trusted Base, Trusted Plat-form Module.

Alternativ ist das Sicherheitselement als ein entnehmbares Modul mit dem mobilen Endgerät verbunden, beispielsweise als Chipkarte, insbesondere als Teilnehmeridentifikationsmodul, Smart Card, Massenspeicherkarte, USB-Token, Multimediakarte, Secure MicroSD-Karte, Mobilfunknetztoken, z.B. ein UMTS-Surfstick und/oder als elektronisches Identitätsdokument, beispielsweise als elektronischer Personalausweis beziehungsweise Reisepass mit, in einem Speicherbereich abgelegten maschinenlesbaren Identifikationsdaten einer Person.

Gemäß einer weiteren Alternative kann das Sicherheitselement als eine Kombination aus Hard- und Softwarekomponenten in einem vertrauenswürdigen Teil eines Betriebssystems des Endgeräts ausgebildet sein, die dem Fachmann auch als gesicherte Laufzeitumgebung ("Trusted Execution Environment"; TEE) bekannt ist. Das Sicherheitselement kann dann beispielsweise innerhalb einer solchen gesicherten Laufzeitumgebung in Form von darin ablaufenden Programmen, sogenannten Trustlets ausgebildet sein.

Bei dem Sicherheitselement handelt es sich grundsätzlich um einen in Baugröße und Ressourcenumfang reduzierten Computer, der einen Prozessor und mindestens eine Schnittstelle zur Kommunikation mit einem ex-ternen Gerät aufweist. Häufig besitzt er keine oder nur eine rudimentäre eigene Nutzerdatenausgabe. Das Sicherheitselement weist insbesondere einen Datenspeicher zum Ablegen von Daten, Informationen, Dateien und/oder Applikationen mit dazugehörigen Variablen ab, wobei Bereiche des Datenspeichers flüchtig oder nicht-flüchtig sein können. Der nichtflüchtige Datenspeicher kann insbesondere permanent, beispielsweise als ein Read-Only-Memory, kurz ROM oder semi-permanent sein, beispielsweise als ein Electrically-Erasable-Programmable-Read-Only-Memory, kurz EEPROM, Flashspeicher, Ferroelectric Random Access Memory, kurz FRAM bzw. FeRAM-Speicher oder Magnetoresistive Random Access Memory, kurz MRAM-Speicher.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Betreiben eines Sicherheitselements, als auch im Rahmen des zweiten Aspekts der Erfindung, d.h. im Rahmen des Sicherheitselements, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung eines Kommunikationssystems mit einem Sicherheitselement, die unterschiedliche Aspekte der vorliegenden Erfindung illustriert, und
- Fig. 2: eine schematische Darstellung eines bevorzugten Ablaufs beim Betreiben des Sicherheitselements von Figur 1.

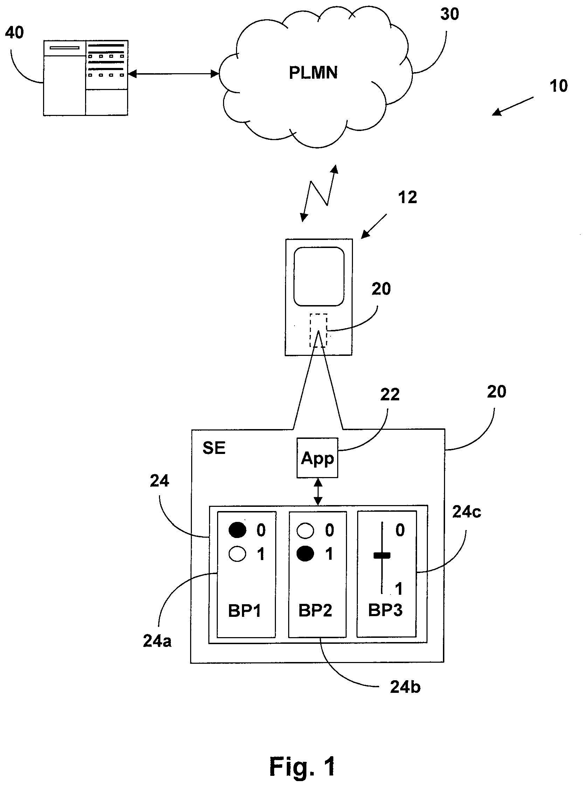

Figur 1 zeigt eine schematische Darstellung der Komponenten eines Kommunikationssystems 10 sowie einige der Kommunikationsverbindungen zwischen diesen Komponenten, das unterschiedliche Aspekte der vorliegenden Erfindung illustriert. Obgleich in der nachstehenden detaillierten Beschreibung auf ein "mobiles" Endgerät Bezug genommen wird, wird der Fachmann erkennen, dass die vorliegende Erfindung vorteilhaft im Zusammenhang mit jeder Art von Endgerät implementiert werden kann, das dazu ausgestaltet ist, über ein mobiles oder zelluläres Kommunikationsnetzwerk zu kommunizieren, also auch mit Endgeräten, deren Standort sich praktisch nicht ändert. Mit anderen Worten: das hierein verwendete Attribut "mobil" bezieht sich auf die Fähigkeit des Endgeräts über ein mobiles oder zelluläres Kommunikationsnetzwerk zu kommunizieren, einschließlich IP-basierte mobile Kommunikationsnetzwerke.

Ein beispielhaftes mobiles Endgerät 12 ist in Figur 1 dargestellt, das ein Sicherheitselement ("Secure Element") 20 zum sicheren Speichern und Verarbeiten von Daten umfasst, die beispielsweise das mobile Endgerät 12 und/oder dessen Benutzer eindeutig identifizieren. Wie dies in Figur 1 angedeutet ist, handelt es sich bei dem mobilen Endgerät 12 vorzugsweise um ein Mobiltelefon, ein Smartphone oder eine ähnliche Vorrichtung. Der Fachmann wird jedoch erkennen, dass das mobile Endgerät 12 gemäß der vorliegenden Erfindung ebenfalls in Form von anderen Vorrichtungen implementiert werden kann, wie beispielsweise ein Tablett-Computer, ein Notebook, ein TV-System, eine Set-Top-Box, ein Verkaufsautomat, ein Kraftfahrzeug, eine Überwachungskamera, eine Sensorvorrichtung und dergleichen.

Das in Figur 1 dargestellte Kommunikationssystem 10 umfasst ferner eine Serverinstanz 40, die vorzugsweise Teil eines Hintergrundsystems ist und dazu ausgestaltet ist, mit dem mobilen Endgerät 12 und dem Sicherheitselement 20 erfindungsgemäß zu interagieren. Wie dies nachstehend detaillierter beschrieben wird, wird die Serverinstanz 40 vorzugsweise vom Hersteller bzw. Herausgeber des mobilen Endgeräts 12 und/oder des Sicherheitselements 20 oder von einem Mobilfunknetzbetreiber betrieben.

Gemäß bevorzugter Ausführungsformen der Erfindung ist das Sicherheitselement 20 als ein Teilnehmeridentifikationsmodul in Form einer eUICC oder UICC mit einer darauf laufenden SIM-Applikation ausgestaltet, d.h. als ein Sicherheitselement, das fester Bestandteil des mobilen Endgeräts 12 ist und in einem Mobilfunknetzwerk für die eindeutige und sichere Identifizierung des Benutzers und für die Bereitstellung unterschiedlicher Funktionen und Mehrwertdienste verwendet wird. Alternativ kann das Sicherheitselement 20 als ein Teilnehmeridentifikationsmodul in Form einer SIM (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen in Form von Teilnehmeridentifikationsmodulen, die je nach Generation und Typ des zugrunde liegenden Mobilfunkkommunikationssystemstandards als USIM, R-UIM, ISIM und dergleichen bezeichnet werden, ebenfalls von der vorliegenden Erfindung umfasst werden.

Gemäß weiterer bevorzugter Ausführungsformen der Erfindung kann das Sicherheitselement 20 in Form eines Teilnehmeridentifikationsmoduls als eine Kombination aus Hard- und Softwarekomponenten in einem vertrauenswürdigen Teil eines Betriebssystems des Endgeräts 12 ausgebildet sein, die dem Fachmann auch als gesicherte Laufzeitumgebung ("Trusted Execution Environment"; TEE) bekannt ist. Das Sicherheitselement 20 in Form eines Teilnehmeridentifikationsmoduls kann dann beispielsweise innerhalb einer solchen gesicherten Laufzeitumgebung des Endgeräts 12 in Form von darin ablaufenden Programmen, sogenannten Trustlets ausgebildet sein.

Vorzugsweise ist das mobile Endgerät 12 dazu ausgestaltet, über die Luftschnittstelle mit einem Mobilfunknetzwerk (auch als "Public Land Mobile Network" [PLMN] bezeichnet) 30 zu kommunizieren, das von einem Mobilfunknetzbetreiber (auch als "Mobile Network Operator" [MNO] bezeichnet) vorzugsweise gemäß dem GSM-Standard ("Global Standard for Mobile Communications") betrieben wird. Nachstehend werden bevorzugte Ausführungsformen der Erfindung im Zusammenhang mit einem Mobilfunknetzwerk 30 gemäß den GSM-Standards beschrieben, die in einer Vielzahl von ETSI-Spezifikationen spezifiziert sind. Der Fachmann wird jedoch erkennen, dass die vorliegende Erfindung auch im Zusammenhang mit anderen Mobilfunksystemen vorteilhaft eingesetzt werden kann. Derartige Systeme umfassen Mobilfunksysteme der dritten Generation (3GPP), wie UMTS (Universal Mobile Telecommunications System), Mobilfunksysteme der nächsten bzw. vierten Generation (4G), wie LTE (Long Term Evolution), sowie andere Mobilfunksysteme, wie CDMA, GPRS (General Packet Radio Service) und dergleichen.

Erfindungsgemäß ist das Sicherheitselement 20 dazu ausgestaltet, Daten über dessen Verwendung und/oder die Verwendung des Endgeräts 12 zu sammeln, d.h. Daten darüber zu sammeln, wie das Sicherheitselement 20 und/oder das mobile Endgerät 12 im Betrieb eingesetzt werden. Vorzugsweise erfolgt dies durch eine auf dem Sicherheitselement 20 implementierte Applikation 22. Zum Ausführen und Speichern dieser Applikation 22 weist das Sicherheitselement 20 vorzugsweise einen Prozessor und einen Speicher auf. Neben einem solchen Prozessor und einem solchen Speicher umfasst das Sicherheitselement 20 vorzugsweise eine IO-Schnittstelle, die dazu ausgestaltet ist, die Kommunikation zwischen dem Sicherheitselement 20 und dem mobilen Endgerät 12 zu ermöglichen, und die hierzu oftmals als eine Kontaktfläche auf einer Seite des Sicherheitselements 20 ausgebildet ist. Der Speicher kann einen flüchtigen Speicherabschnitt (RAM) und einen nichtflüchtigen Speicherabschnitt umfassen. Vorzugsweise handelt es sich bei dem nichtflüchtigen Speicherabschnitt um einen Flash-Speicher (Flash-EEPROM). Dabei kann es sich beispielsweise um einen Flash-Speicher mit einer NAND- oder einer NOR-Architektur handeln. Alternativ oder zusätzlich kann es sich bei dem nichtflüchtigen Speicherabschnitt um ein ROM handeln. Die Applikation 22 kann beispielsweise in Form eines Java Applets implementiert sein. In diesem Fall kann zur Bereitstellung einer Ausführungsumgebung für die Applikation 22 auf dem Prozessor des Sicherheitselements 20 ein entsprechendes Betriebssystem bzw. eine entsprechende Laufzeitumgebung vorgesehen sein, z.B. eine Java Card™ Virtual Machine (Java Card Virtuelle Maschine).

Bei der in Figur 1 dargestellten bevorzugten Ausführungsform sind in einem vorzugsweise nicht-flüchtigen Speicherbereich 24 des Sicherheitselements 20 Betriebsparameter 24a-c hinterlegt. Diese Betriebsparameter 24a-c definieren Parameter, die den Betrieb des Sicherheitselements 20 beeinflussen, d.h. wie von diesen Betriebsparametern abhängige Funktionen bzw. Dienste vom Sicherheitselement 20 ausgeführt werden. Dabei kann es sich, wie dies in Figur 1 angedeutet ist, bei einem Betriebsparameter um einen Parameter handeln, der einen Wert aus einem diskreten Wertebereich annehmen kann, wie dies bei den in Figur 1 dargestellten Betriebsparametern BP1 24a und BP2 24b mit den beispielhaften Werten "0" und "1" der Fall ist, oder um einen Parameter, der einen Wert aus einem oder mehreren kontinuierlichen Wertebereichen annehmen kann, wie dies bei dem in Figur 1 dargestellten Betriebsparameter BP3 24c der Fall ist, der beispielhaft einen Wert aus dem Wertebereich von 0 bis 1 annehmen kann.

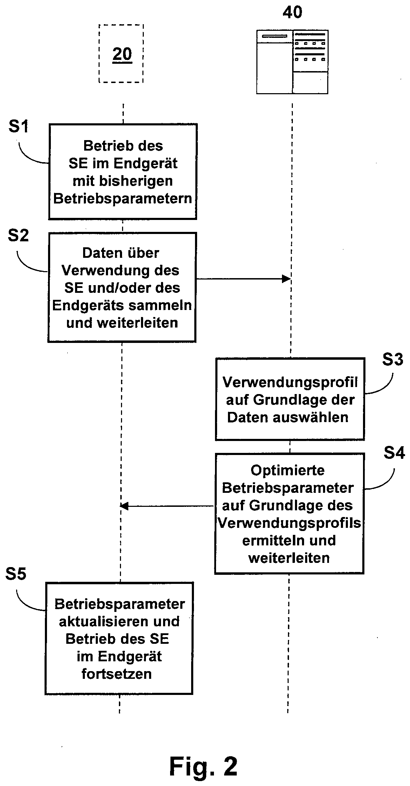

Figur 2 zeigt den bevorzugten Ablauf beim Betreiben des Sicherheitselements 20 gemäß der vorliegenden Erfindung. Ausgangspunkt ist der normale Betrieb des Sicherheitselements 20 im mobilen Endgerät 12 mit den beispielsweise vom Hersteller und/oder dem Herausgeber des Sicherheitselements 20 eingestellten bzw. vordefinierten Betriebsparametern, wie dies in Schritt S1 von Figur 2 gezeigt ist. Wie bereits vorstehend beschrieben, ist das Sicherheitselement 20 erfindungsgemäß dazu eingestellt, Daten über dessen Verwendung und/oder die Verwendung des mobilen Endgeräts 12 zu sammeln und die gesammelten Daten an die Serverinstanz 40 weiterzuleiten (Schritt S2 von Figur 2). Unter Daten über die Verwendung des Sicherheitselements 20 und/oder die Verwendung des mobilen Endgeräts 12 werden erfindungsgemäß insbesondere solche Daten verstanden, die von der jeweiligen Wahl der Betriebsparameter des Sicherheitselements 20 abhängen, d.h. auf die die jeweilige Wahl der Betriebsparameter einen Einfluss hat.

Nachdem das Sicherheitselement 20 die in Schritt S2 von Figur 2 gesammelten Daten an die Serverinstanz 40 weitergeleitet hat, bestimmt die Serverinstanz in Schritt S3 von Figur 2 auf der Grundlage dieser Daten ein Verwendungsprofil des Sicherheitselements 20. Belegen die vom Sicherheitselement 20 in Schritt S2 von Figur 2 gesammelten Daten beispielsweise, dass das mobile Endgerät 12, in dem sich das Sicherheitselement 20 befindet, häufig die Position wechselt, könnte dem Sicherheitselement 20 in Schritt S3 von Figur 2 ein Verwendungsprofil "Mobiles Endgerät" zugeordnet werden. Weisen andernfalls die vom Sicherheitselement 20 in Schritt S2 von Figur 2 gesammelten Daten darauf hin, dass das mobile Endgerät 12, in dem sich das Sicherheitselement 20 befindet, im Wesentlichen stationär ist, könnte dem Sicherheitselement 20 ein Verwendungsprofil "Stationäres Endgerät" zugeordnet werden. Ein geeignetes Datum zur Erfassung der Mobilität des Endgeräts 12 könnte z.B. die Häufigkeit sein, mit der sich eine auf dem Sicherheitselement 20 hinterlegte Datei über einen vordefinierten Zeitraum ändert, welche die Position des Endgeräts 12 bzw. des darin enthaltenen Sicherheitselements 20 angibt (im Fall eines Sicherheitselements 20 in Form einer SIM beispielsweise die auf der SIM hinterlegte und laufend aktualisierte Datei "EF_LOCI"). Der Fachmann wird anhand des vorstehenden sehr einfachen Beispiels erkennen, dass diese beispielhafte Zuordnung bzw. Klassifizierung der vom Sicherheitselement 20 gesammelten Daten über dessen Verwendung bzw. die Verwendung des Endgeräts 12 nach Verwendungsprofilen beliebig verfeinert werden kann und bei der Bestimmung eines Verwendungsprofils mit optimierten Betriebsparametern mehr als ein Datum berücksichtigt werden kann.

In Schritt S4 von Figur 2 erfolgt ein Bestimmen bzw. ein Auswählen von optimierten Betriebsparametern auf der Grundlage des von der Serverinstanz 40 in Schritt S3 bestimmten Verwendungsprofils sowie ein Weiterleiten dieser optimierten Betriebsparameter an das Sicherheitselement 20. Vorzugsweise verfügt die Serverinstanz 40 für die Auswahl eines geeigneten Verwendungsprofils über eine Datenbank oder hat Zugriff auf eine entsprechende externe Datenbank, in der zu einer Vielzahl von definierten Verwendungsprofilen jeweils ein Satz von optimierten Betriebsparametern hinterlegt ist.

In Schritt S5 von Figur 2 übernimmt das Sicherheitselement 20 die von der Serverinstanz 40 in Schritt S4 von Figur 2 übermittelten Betriebsparameter und setzt damit den Betrieb fort. Hierzu kann es in der Praxis nötig sein, das Sicherheitselement 20 neu zu starten, beispielsweise mittels einer Reset-Operation.

Da sich das Einsatzgebiet bzw. die Verwendung eines Sicherheitselements bzw. eines Endgeräts mit der Zeit ändern kann, ist es erfindungsgemäß vorstellbar, dass nach Schritt S5 von Figur 2 das Verfahren mit den Schritten S1 und S2 von Figur 2 fortgesetzt wird. Dies kann erfindungsgemäß ebenfalls in dem Fall vorteilhaft sein, dass die vermeintlich optimierten Betriebsparameter sich im tatsächlichen Betrieb als immer noch optimierbar herausstellen. In diesem Fall, ist es erfindungsgemäß denkbar, dass mittels mehrerer Durchläufe durch das in Figur 2 dargestellte bevorzugte Verfahren iterativ optimale Betriebsparameter gefunden werden.

Wie dies dem Fachmann bekannt ist, kann es vorteilhaft sein, die in Figur 2 dargestellten Schritte, bei denen sicherheitskritische Daten zwischen dem Sicherheitselement 20 und der Serverinstanz 40 ausgetauscht werden, kryptographisch abzusichern, beispielsweise indem mittels geeigneter kryptographischer Schlüsselpaare Daten ver- und entschlüsselt werden und/oder über diese eine Prüfsumme gebildet wird.

Der Fachmann wird erkennen, dass die vorliegende Erfindung nicht auf die in Figur 2 dargestellte bevorzugte Abfolge und die dort gezeigten bevorzugten Details beschränkt ist. Beispielsweise könnte der Schritt S3 des Bestimmens eines Verwendungsprofils auf der Grundlage der vom Sicherheitselement 20 gesammelten Daten auch vom Sicherheitselement 20 selbst anstatt von der Serverinstanz 40 durchgeführt werden.

Nachstehend werden zwei Beispiele für Betriebsparameter beschrieben, die mittels der vorliegenden Erfindung optimiert werden können und somit zu einer besserer Abstimmung des Sicherheitselements an das tatsächliche Einsatzgebiet des Sicherheitselements bzw. des Endgeräts führen. Der Fachmann wird jedoch erkennen, dass die nachstehenden Beispiele nicht abschließend sind und dass es eine Vielzahl weiterer Betriebsparameter gibt, die dazu geeignet sind, mittels der vorliegenden Erfindung auf das tatsächliche Einsatzgebiet des Sicherheitselements 20 abgestimmt zu werden.

Wie vorstehend bereits beschrieben, ist das Sicherheitselement 20 vorzugsweise als ein Teilnehmeridentifikationsmodul, beispielsweise in Form einer eUICC oder einer SIM, zur Identifizierung eines Teilnehmers gegenüber einem Mobilfunknetzwerk, beispielsweise dem in Figur 1 dargestellten PLMN 30, ausgebildet. Derartige Teilnehmeridentifikationsmodule verfügen in der Regel über einen nicht-flüchtigen Speicher in Form eines Flash-Speichers, bei dem vom Speicherhersteller nur eine begrenzte Anzahl von Zugriffen zugesichert wird.

Aus der DE102012003710 ist ein Verfahren bekannt, bei dem mittels jeweiliger Zugriffszähler verfolgt wird, wie oft auf die jeweiligen Pages bzw. Speicherseiten des Flash-Speichers des Teilnehmeridentifikationsmoduls zugegriffen wird. Um hierdurch den Flash-Speicher nicht weiter zu belasten, werden die Werte dieser Zugriffszähler auf dem flüchtigen Speicher, in der Regel ein RAM, des Teilnehmeridentifikationsmoduls gespeichert und aktualisiert. Nur für den Fall, dass der Wert eines Zugriffszählers einen vordefinierten Schwellenwert übersteigt, werden die Werte der Zugriffszähler in den Flash-Speicher geschrieben, damit diese auch nach einer "Reset"-Operation des Teilnehmeridentifikationsmoduls zur Verfügung stehen. Ist ein solches Verfahren in einem Teilnehmeridentifikationsmodul implementiert, das Teil eines mobilen Endgeräts ist, das sich in der Regel nur über einen kurzen Zeitraum in ein Mobilfunknetzwerk einbucht, kann es vorkommen, dass ein vordefinierter Schwellenwert, der zu hoch gewählt ist, nie erreicht wird. Wird im Gegensatz der vordefinierte Schwellenwert zu niedrig gewählt, erhöht sich unnötigerweise die Zahl der Zugriffe auf den Flash-Speicher, was zu einer stärkeren Abnutzung des Flash-Speichers führt.

Bei diesem Schwellenwert handelt es sich um ein bevorzugtes Beispiel für einen Betriebsparameter, der gemäß der vorliegenden Erfindung angepasst werden kann. Zur Anpassung dieses Betriebsparameters an die tatsächliche Verwendung des Sicherheitselements 20 bzw. des Endgeräts 12 sammelt vorzugsweise die Applikation 22 des Sicherheitselements 20 (entsprechend dem Schritt S2 in Figur 2) Daten darüber, wie lange im Schnitt das Sicherheitselement 20 in dem PLMN 30 eingebucht ist. Hierzu könnte die Applikation 22 als Daten im Sinne von Schritt S2 von Figur 2 beispielsweise die Anzahl der Status-Kommandos ermitteln, die vom Sicherheitselement 20 vom Einbuchen in das PLMN 30 bis zum Ausbuchen aus diesem (üblicherweise durch eine "Reset"-Operation) versendet werden, da Status-Kommandos von einem Sicherheitselement in Form eines Teilnehmeridentifikationsmoduls in regelmäßigen Intervallen versendet werden und somit eine Art Zeiteinheit definieren.

Sollten diese Daten darauf hindeuten, dass das Sicherheitselement 20 im Schnitt nur über kurze Zeiträume in das PLMN 30 eingebucht ist, kann die Serverinstanz 40 (oder alternativ das Sicherheitselement 20 selbst) ein Verwendungsprofil mit einem niedrigeren Schwellenwert auswählen, damit das in der DE102012003710 beschriebene Verfahren sinnvoll eingesetzt werden kann. Deuten diese Daten andererseits darauf hin, dass das Sicherheitselement 20 im Schnitt über lange Zeiträume in das PLMN 30 eingebucht ist, kann die Serverinstanz 40 (oder alternativ das Sicherheitselement 20 selbst) ein Verwendungsprofil mit einem höheren Schwellenwert auswählen, um den Flash-Speicher des Sicherheitselements 20 nicht unnötig zu belasten.

Befindet sich ein mobiles Endgerät mit einem Sicherheitselement in Form eines Teilnehmeridentifikationsmoduls im Grenzbereich zwischen zwei oder mehr Mobilfunknetzwerken kann es bei aktiviertem Auto-Roaming zu häufigen Wechseln zwischen diesen Mobilfunknetzwerken kommen, was den Betrieb des mobilen Endgeräts beeinträchtigen könnte. Wie dies dem Fachmann bekannt ist, verfügt das Sicherheitselement in Form eines Teilnehmeridentifikationsmoduls für jedes Mobilfunknetzwerk in der Regel über eine eigene Subskription mit einer eigenen IMSI, wobei immer nur eine Subskription aktiv sein kann. Um dem mobilen Endgerät einen möglichst lückenlosen Netzzugang zu ermöglichen, ist auf dem Sicherheitselement üblicherweise die Länge eines Zeitfensters definiert, innerhalb dessen sich das Sicherheitselement erfolgreich in ein anderes Mobilfunknetzwerk einbuchen muss. Erfolgt innerhalb dieses Zeitfensters mit vordefinierter Länge kein Einbuchen in ein anderes Mobilfunknetzwerk, wird auf das bisher verwendete Mobilfunknetzwerk zurückgegriffen, d.h. die bisher verwendete Subskription wird reaktiviert.

Bei der Länge dieses Zeitfensters zum Einbuchen handelt es sich um ein weiteres bevorzugtes Beispiel für einen Betriebsparameter, der gemäß der vorliegenden Erfindung angepasst werden kann. Zur Anpassung dieses Betriebsparameters an die tatsächliche Verwendung des Sicherheitselements 20 bzw. des Endgeräts 12 sammelt vorzugsweise die Applikation 22 des Sicherheitselements 20 (entsprechend dem Schritt S2 in Figur 2) Daten darüber, wie lange im Schnitt eine Subskription der mehreren Subskriptionen des Sicherheitselements 20 aktiv ist. Hierzu könnte die Applikation 22 als Daten im Sinne von Schritt S2 von Figur 2 beispielsweise die Anzahl der Status-Kommandos ermitteln, die vom Sicherheitselement 20 vom Aktivieren bis zum Deaktivieren einer jeweiligen Subskription versendet werden.

Zeigen diese Daten, dass die Subskriptionen des Sicherheitselements 20 im Schnitt nur kurzzeitig aktiv sind (z.B. weniger als zehn Status-Kommandos pro Subskription), deutet das darauf hin, dass ein häufiger Wechsel zwischen den Subskriptionen erfolgt, was, wie vorstehend bereits erwähnt, zu einer Beeinträchtigung der Funktionalität des mobilen Endgeräts 12 führen kann. Um dem entgegenzuwirken, kann die Serverinstanz 40 (oder alternativ das Sicherheitselement 20 selbst) auf der Grundlage dieser Daten entsprechend Schritt S3 von Figur 2 ein Verwendungsprofil mit einem längeren Zeitfenster zum Einbuchen in ein Mobilfunknetzwerk auswählen.

## Patentansprüche

1. Verfahren zum Betreiben eines Sicherheitselements (20), das Teil eines mobilen Endgeräts (12) ist, wobei die Funktionalität des Sicherheitselements (20) von einem auf dem Sicherheitselement (20) hinterlegten Satz von Betriebsparametern (24a-c) abhängt, wobei das Verfahren die folgenden Schritte umfasst:
das Betreiben des Sicherheitselements (20) mit dem auf dem Sicherheitselement (20) hinterlegten Satz von Betriebsparametern (24a-c);
das Sammeln von Daten über die Verwendung des Sicherheitselements (20) und/oder des mobilen Endgeräts (12);
das Auswählen eines Verwendungsprofils auf der Grundlage der gesammelten Daten, wobei dem Verwendungsprofil ein darauf abgestimmter Satz von Betriebsparametern zugeordnet ist; und
das Betreiben des Sicherheitselements (20) mit dem auf das ausgewählte Verwendungsprofil abgestimmten Satz von Betriebsparametern, **dadurch gekennzeichnet, dass**
einer der Betriebsparameter des Sicherheits-elements (20) angepasst wird, der bestimmt, ab welcher Größe in einem flüchtigen Speicher des Sicherheitselements (20) hinterlegte Zugriffszähler, die jeweils die Zahl der Zugriffe auf eine jeweilige Speicherseite des nichtflüchtigen Speichers des Sicherheitselements (20) angeben, im nichtflüchtigen Speicher des Sicherheitselements (20) gespeichert werden, und/oder einer der Betriebsparameter des Sicherheitselements (20) angepasst wird, der die Länge des Zeitfensters bestimmt, innerhalb dessen sich das Sicherheitselement (20) in das Mobilfunknetzwerk (30) einbuchen muss.

2. Verfahren nach Anspruch 1, wobei der Schritt des Sammelns von Daten über die Verwendung des Sicherheitselements (20) und/oder des mobilen Endgeräts (12) mittels einer Applikation (22) auf dem Sicherheitselement (20) durchgeführt wird.

3. Verfahren nach Anspruch 1, wobei der Schritt des Auswählens eines Verwendungsprofils durch das Sicherheitselement (20) erfolgt.

4. Verfahren nach Anspruch 1, wobei der Schritt des Auswählens eines Verwendungsprofils durch eine Serverinstanz (40) erfolgt, die in Kommunikation mit dem Sicherheitselement (20) steht und die Zugriff auf eine Datenbank mit einer Vielzahl von Verwendungsprofilen hat.

5. Verfahren nach Anspruch 4, wobei es sich bei dem Sicherheitselement (20) um ein Teilnehmeridentifikationsmodul handelt, das dazu ausgestaltet ist, einen Teilnehmer gegenüber einem Mobilfunknetzwerk (30) zu authentisieren und mit der Serverinstanz (40) über das Mobilfunknetzwerk (30) zu kommunizieren.

6. Verfahren nach Anspruch 1, wobei die Schritte des Verfahrens mehrfach hintereinander durchgeführt werden, um iterativ optimale Betriebsparameter zu bestimmen und/oder Änderungen der Verwendung des Sicherheitselements (20) und/oder des mobilen Endgeräts (12) berücksichtigen zu können.

7. Sicherheitselement (20), das Teil eines mobilen Endgeräts (12) ist, wobei die Funktionalität des Sicherheitselements (20) von einem auf dem Sicherheitselement (20) hinterlegten Satz von Betriebsparametern (24a-c) abhängt, wobei das Sicherheitselement (20) dazu ausgestaltet ist, gemäß einem Verfahren nach einem der vorhergehenden Ansprüche betrieben zu werden.

8. Mobiles Endgerät (12) mit einem Sicherheitselement (20) nach Anspruch 7.

## Claims

1. A method for operating a security element (20) which is part of a mobile end device (12), with the functionality of the security element (20) depending on a set of operating parameters (24a-c) that is deposited on the security element (20), wherein the method comprises the following steps:
operating the security element (20) with the set of operating parameters (24a-c) that is deposited on the security element (20);
collecting data about the use of the security element (20) and/or of the mobile end device (12);
selecting a use profile on the basis of the collected data, with the use profile being assigned a set of operating parameters that is matched thereto; and
operating the security element (20) with the set of operating parameters that is matched to the selected use profile, **characterized in that**
one of the operating parameters of the security element (20) is adapted, said parameter determining the size as of which access counters deposited in a volatile memory of the security element (20) and respectively stating the number of accesses to a respective memory page of the non-volatile memory of the security element (20) are stored in the non-volatile memory of the security element (20), and/or
one of the operating parameters of the security element (20) is adapted, said parameter determining the length of the time window within which the security element (20) has to log into the mobile radio network (30).

2. The method according to claim 1, wherein the step of collecting data about the use of the security element (20) and/or of the mobile end device (12) is carried out by means of an application (22) on the security element (20).

3. The method according to claim 1, wherein the step of selecting a use profile is effected through the security element (20).

4. The method according to claim 1, wherein the step of selecting a use profile is effected through a server entity (40) which is in communication with the security element (20) and which has access to a database having a multiplicity of use profiles.

5. The method according to claim 4, wherein the security element (20) is a subscriber identification module which is configured for authenticating a subscriber toward a mobile radio network (30) and communicating with the server entity (40) via the mobile radio network (30).

6. The method according to claim 1, wherein the steps of the method are carried out several times in succession in order to iteratively determine optimal operating parameters and/or to be able to take account of changes of the use of the security element (20) and/or of the mobile end device (12).

7. A security element (20) which is part of a mobile end device (12), with the functionality of the security element (20) depending on a set of operating parameters (24a-c) that is deposited on the security element (20), wherein the security element (20) is configured for being operated according to a method according to any of the preceding claims.

8. A mobile end device (12) having a security element (20) according to claim 7.

## Revendications

1. Procédé de fonctionnement d'un élément de sécurité (20) qui fait partie d'un terminal (12) mobile, cependant que la fonctionnalité de l'élément de sécurité (20) dépend d'un jeu de paramètres de fonctionnement (24a-c) stocké sur l'élément de sécurité (20), le procédé comprenant les étapes suivantes :
le fonctionnement de l'élément de sécurité (20) avec le jeu de paramètres de fonctionnement (24a-c) stocké sur l'élément de sécurité (20),
la collecte de données sur l'utilisation de l'élément de sécurité (20) et/ou du terminal (12) mobile ;
la sélection d'un profil d'utilisation sur la base des données collectées, cependant que, au profil d'utilisation, un jeu de paramètres de fonctionnement y étant accordé est affecté ; et
le fonctionnement de l'élément de sécurité (20) avec le jeu de paramètres de fonctionnement accordé au profil d'utilisation sélectionné,
**caractérisé en ce que**
un des paramètres de fonctionnement de l'élément de sécurité (20) est adapté, lequel détermine à partir de quelle grandeur des compteurs d'accès, stockés dans une mémoire volatile de l'élément de sécurité (20) et indiquant respectivement le nombre des accès à une page de mémoire respective de la mémoire non volatile de l'élément de sécurité (20), sont mémorisés dans la mémoire non volatile de l'élément de sécurité (20), et/ou
un des paramètres de fonctionnement de l'élément de sécurité (20) est adapté, lequel détermine la longueur du créneau horaire à l'intérieur duquel l'élément de sécurité (20) doit se relier au réseau radio mobile (30).

2. Procédé selon la revendication 1, cependant que l'étape de la collecte de données sur l'utilisation de l'élément de sécurité (20) et/ou du terminal (12) mobile est effectuée sur l'élément de sécurité (20) au moyen d'une application (22).

3. Procédé selon la revendication 1, cependant que l'étape de la sélection d'un profil d'utilisation est effectuée par l'élément de sécurité (20).

4. Procédé selon la revendication 1, cependant que l'étape de la sélection d'un profil d'utilisation a lieu par une instance de serveur (40) qui est en communication avec l'élément de sécurité (20) et qui a accès à une banque de données ayant une pluralité de profils d'utilisation.

5. Procédé selon la revendication 4, cependant que l'élément de sécurité (20) consiste en un module d'identification d'abonné conçu pour authentifier un abonné vis-à-vis d'un réseau radio mobile (30) et pour communiquer avec l'instance de serveur (40) par l'intermédiaire du réseau radio mobile (30).

6. Procédé selon la revendication 1, cependant que les étapes du procédé sont effectuées plusieurs fois consécutivement afin de déterminer itérativement des paramètres optimaux de fonctionnement et/ou de pouvoir prendre en compte des modifications de l'utilisation de l'élément de sécurité (20) et/ou du terminal (12) mobile.

7. Elément de sécurité (20) qui fait partie d'un terminal (12) mobile, cependant que la fonctionnalité de l'élément de sécurité (20) dépend d'un jeu de paramètres de fonctionnement (24a-c) stocké sur l'élément de sécurité (20), cependant que l'élément de sécurité (20) est conçu pour fonctionner suivant un procédé selon une des revendications précédentes.

8. Terminal (12) mobile ayant un élément de sécurité (20) selon la revendication 7.
